# EUROPÄISCHE PATENTSCHRIFT

(11) **EP 2 616 261 B1**
(45) Veröffentlichungstag und Bekanntmachung des Hinweises auf die Patenterteilung: **09.09.2015**
(21) Anmeldenummer: 11745930.5
(22) Anmeldetag: 12.08.2011
(51) Int. Cl.: B60K 11/00, B60K 11/04, B60K 11/08

(54) **FLUIDKÜHLVORRICHTUNG**
FLUID COOLING APPARATUS
DISPOSITIF DE REFROIDISSEMENT DE FLUIDE

(30) Priorität: 17.09.2010 DE 102010045795
(43) Veröffentlichungstag der Anmeldung: 24.07.2013
(73) Patentinhaber: Hydac AG, 6312 Steinhausen (CH)
(72) Erfinder: ZEOLLA, Giuseppe, CH-6648 Minusio (TI) (CH); SCHMITT, Ralf, 66636 Tholey (DE)
(74) Vertreter: Bartels, Martin Erich Arthur
(86) Internationale Anmeldenummer: PCT/EP2011/004052
(87) Internationale Veröffentlichungsnummer: WO 2012/034623

(56) Entgegenhaltungen:
- DE-A1-102008 027 424
- US-A- 2 979 205
- US-A- 3 996 999

## Beschreibung

Die Erfindung betrifft eine Fluidkühlvorrichtung mit mindestens einer Wärmetauschereinrichtung zur Kühlung mindestens eines Arbeits- oder Kühlfluids, das im Betrieb von fahrbaren Arbeitsmaschinen sich erwärmt oder eingesetzt ist, die zur Abdeckung von Maschinen-, Motor-oder Chassisteilen über eine Maschinenverkleidung verfügen, und mit einem das Arbeits- und/oder Kühlfluid beinhaltenden Tank mit vorgebbarer Wandaußenkontur.

Kühlvorrichtungen für Arbeits- oder Kühlfluide sind für eine Vielzahl von Anwendungsfällen einsetzbar und in verschiedenen Ausführungsformen auf dem Markt frei erhältlich. Ein wichtiges Anwendungsgebiet derartiger Kühlvorrichtungen ist der Einsatz bei Arbeitsmaschinen mit einem Hydrauliksystem. Dabei kann es sich beispielsweise um einen sogenannten offenen Fluidkreislauf handeln, etwa in Form einer Arbeitshydraulik, oder einen geschlossenen, hydrostatischen Antrieb, etwa in Form eines Fahrantriebes. Die DE 10 2008 027 424 A1 offenbart beispielsweise eine Fluidkühlvorrichtung für Hydrauliköl, das als Arbeitsfluid für den hydrostatischen Antrieb einer fahrbaren Arbeitsmaschine dient.

Bei Arbeitsmaschinen bereitet der Einbau der Kühlvorrichtungen innerhalb der Verkleidungen sowohl räumliche, bedingt durch den zur Verfügung stehenden Bauraum, als auch thermische Schwierigkeiten. Trotz des üblicherweise stark begrenzten, zur Verfügung stehenden Bauraumes, muss eine ausreichende und sichere Abfuhr der von der Wärmetauschereinrichtung abgegebenen Wärme sichergestellt sein. So ist es, um zu vermeiden, dass innerhalb von Verkleidungen erwärmte Kühlluft angesaugt wird und wieder zum Primär-Kühlluftstrom gelangen kann, üblich, Trennwände einzubauen, die eine Abdichtung zur jeweiligen Verkleidung bilden. Wie sich gezeigt hat, kommt es jedoch bei dem rauen Betrieb fahrbarer Arbeitsmaschinen durch Vibrationen und Erschütterungen häufig zu einem Versagen derartiger Abdichtungen und dadurch zu entsprechenden thermischen Problemen.

Aus der US 2 979 205 geht ein hydraulischer Tank und eine Wärmetauscherabdeckung hervor. Die Wärmetauscherabdeckung kann neben einem Motorteil angeordnet sein und stellt für sich genommen einen Teil einer Wandaußenkontur dar.

Aus der US 3 996 999 geht ein Hydrauliktank hervor, der zwischen einem Führerhaus und einem Motor angeordnet ist. Der Tank bildet eine Wandaußenkontur. Auf der gegenüberliegenden Seite des Motors ist eine Fluidkühlvorrichtung vorgesehen.

Im Hinblick hierauf liegt der Erfindung die Aufgabe zugrunde, eine Fluidkühlvorrichtung der betrachteten Art zur Verfügung zu stellen, die den im Einsatz bei fahrbaren Arbeitsmaschinen zu stellenden Anforderungen besser gerecht wird.

Erfindungsgemäß ist diese Aufgabe durch eine Fluidkühlvorrichtung gelöst, die die Merkmale des Patentanspruches 1 in seiner Gesamtheit aufweist.

Danach besteht eine wesentliche Besonderheit der Erfindung darin, dass zumindest Teile der Wandaußenkontur des Tanks Bestandteil der Maschinenverkleidung sind.

Dadurch, dass der Tank Bestandteil der Maschinenverkleidung ist und sich die betreffende Tankoberfläche nicht unter der Verkleidung befindet, trägt der Tank selbst zur verbesserten Wärmeabfuhr bei. Da der vom Tank selbst übernommene Teil der Abdeckung weggelassen werden kann, ergibt sich zudem eine Verringerung des Baugewichtes.

In vorteilhafter Weise kann die Anordnung so getroffen sein, dass Teile der Wandaußenkontur des Tanks, die der Umgebung zugewandt sind, als Bestandteil der Maschinen-Außenverkleidung in diese entlang einer Anschlussstelle übergehen. Somit kann der Tank selbst ein Anschlussteil der äußeren Karosserie der Arbeitsmaschine bilden, beispielsweise in Form eines Front- oder Heckabschnitts, der an der Anschlussstelle in eine Motorraumhaube übergeht.

Mit besonderem Vorteil kann hierbei die Anschlussstelle stufenfrei den kontinuierlichen Übergang zwischen der betreffenden Maschinenaußenverkleidung, beispielsweise in Form der Motorraumhaube, und der Wandaußenkontur des Tanks herstellen.

Wenn hierbei entlang der Anschlussstelle eine linienförmig geführte Dichtung zwischen der Maschinenaußenverkleidung, beispielsweise der Haube, und der Wandaußenkontur des Tanks angeordnet ist, ergibt sich der besondere Vorteil, dass der Tank selbst die Funktion einer Trennwand übernimmt, die die Gefahr beseitigt, dass im Betrieb eigene, erwärmte Luft angesaugt werden kann.

Im Hinblick auf eine besonders kompakte Bauweise kann die Anordnung mit Vorteil so getroffen sein, dass der Tank im randseitigen Bereich des Tankgehäuses einen integrierten Aufnahmekanal für die Aufnahme einer Filtereinheit aufweist und dass der Tank im Bereich seiner der Umgebung zugewandten Stirnseite eine Lüftereinrichtung aufweist, die mit ihrer Lüfterabdeckung gleichfalls als Bestandteil der Maschinenaußenverkleidung in diese integriert ist.

Zur Bildung einer besonders kompakten Einheit kann der Tank innerhalb des Tankgehäuses mit einer durchgehenden Mittenausnehmung versehen sein, innerhalb der die Lüfterschaufeln geführt sind.

Wenn hierbei die Wärmetauschereinrichtung in der Art eines Lamellenkühlers auf der der Lüftereinrichtung gegenüberliegenden Seite an das Tankgehäuse anschließt oder integraler Bestandteil des Tankgehäuses ist, bildet das Gesamtsystem der Fluidkühlvorrichtung eine zusammengefasste Baueinheit, die in Arbeitsmaschinen geringen Einbauraum benötigt.

In besonders vorteilhafter Weise kann die der Fluidkühlvorrichtung zugehörige Filtereinrichtung über Ventileinheiten verfügen, die beispielsweise ein Vorspann-, Nachsaug- oder Bypassventil beinhalten, so dass die störungsfreie Versorgung betreffender Verbraucher mit mittels der Kühlvorrichtung in geeigneter Weise temperiertem Fluid gewährleistet ist.

Nachstehend ist die Erfindung anhand eines in der Zeichnung dargestellten Ausführungsbeispieles im Einzelnen erläutert. Es zeigen:
- Fig. 1: in stark schematisch vereinfacht und abgebrochen gezeichneter perspektivischer Darstellung lediglich das vordere Fahrzeugteil einer fahrbaren Arbeitsmaschine, die mit einem Ausführungsbeispiel der erfindungsgemäßen Fluidkühlvorrichtung versehen ist;
- Fig. 2: in der Art eines hydraulischen Schaltplanes den grundsätzlichen Aufbau des Hydrauliksystems der Fluidkühlvorrichtung;
- Fig. 3: eine perspektivische Schrägansicht der von der Arbeitsmaschine abgenommenen Fluidkühlvorrichtung, gesehen mit Blick auf die Rückseite des Tankgehäuses;
- Fig. 4: eine Seitenansicht des Ausführungsbeispieles der Fluidkühlvorrichtung;
- Fig. 5: eine perspektivische Detailansicht lediglich der Wärmetauschereinrichtung und der daran angrenzenden Lüftereinrichtung des Ausführungsbeispieles und
- Fig. 6: eine perspektivische Schrägansicht, gesehen auf die Vorderseite des Ausführungsbeispieles, wobei die Lüftereinrichtung in abgeklappter Lage dargestellt ist.

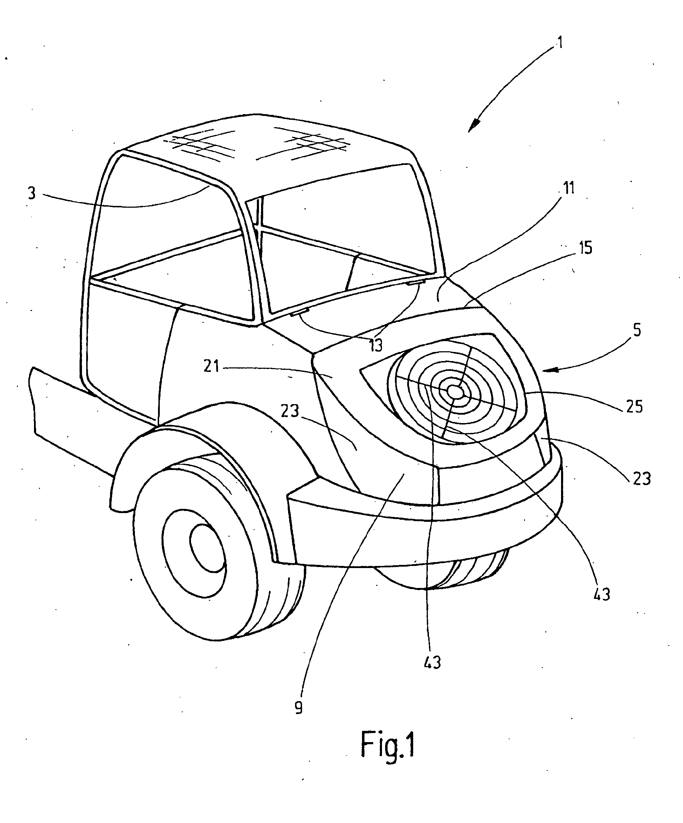

Die Fig. 1 zeigt in skizzenhafter Darstellung lediglich den vorderen Fahrzeugbereich einer fahrbaren Arbeitsmaschine 1, wobei der sich an die Kabine 3 anschließende Bereich weggelassen ist, wo sich hydraulisch betätigbare Arbeitsgeräte, wie Kranausleger, Bagger, Stapler oder dergleichen befinden. Bei dem in Fig. 1 gezeigten Teilbereich der Arbeitsmaschine 1 könnte es sich gleichfalls um die Heckpartie handeln. Für die bedarfsgerechte Versorgung der nicht dargestellten Verbraucher weist die Arbeitsmaschine 1 ein Ausführungsbeispiel der erfindungsgemäßen Fluidkühlvorrichtung 5 auf, das am betreffenden Endbereich der Arbeitsmaschine 1 angeordnet ist und mit der Wandaußenkontur 7 des zugehörigen Fluidtanks 9 Bestandteil der Außenverkleidung bildet, bei der es sich im vorliegenden Fall um eine Motorraumhaube 11 handelt, die für den Zugang zum Maschinenraum um Scharniere 13 hochschwenkbar ist.

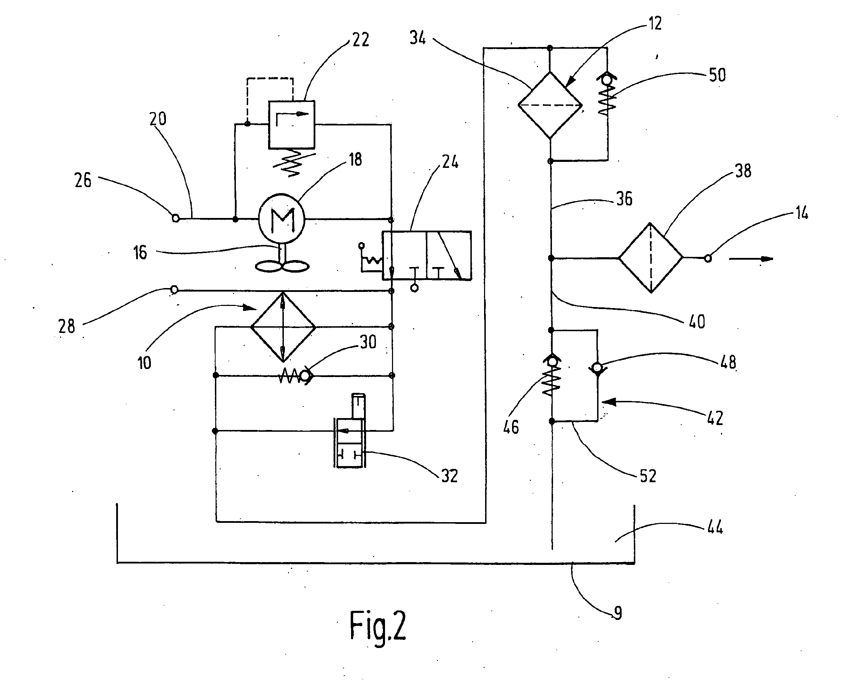

Die hydraulische Schaltplandarstellung der Fluidkühlvorrichtung 5, die in Fig. 2 dargestellt ist, zeigt eine als Ganzes mit 10 bezeichnete Wärmetauschereinrichtung zur Kühlung mindestens eines Fluids, insbesondere in Form von Hydrauliköl. Des weiteren weist die Fluidkühlvorrichtung 5 eine als Ganzes mit 12 bezeichnete Filtereinrichtung zum Filtern des Fluids auf, das an einen Verbraucher 14 weiterleitbar ist. Der Verbraucher 14 soll im vorliegenden Fall aus einem hydrostatischen Antrieb eines Fahrzeuges, insbesondere in Form einer Baumaschine, bestehen, der in üblicher Weise über eine nicht näher dargestellte Speisepumpe oder eine Gruppe von Speisepumpen mit Fluid versorgbar ist. Des weiteren weist die Fluidkühlvorrichtung 5 eine Luftströmungseinrichtung 16 auf, in der Art eines Lüfter- oder Fangebläses. Der Antrieb der Strömungseinrichtung erfolgt über eine Antriebseinrichtung 18, im vorliegenden Fall gebildet aus einem hydraulisch antreibbaren Motor. Anstelle des Hydromotors könnte aber auch ein elektrischer Antriebsmotor (nicht dargestellt) treten. Parallel zum Hydromotor 18 verlaufend ist in den hydraulischen Kreis 20 ein Druckbegrenzungsventil 22 geschaltet, das den Motor vor Überlast schützt. In Fluidströmungsrichtung, dem Motor nachgeschaltet, ist ein von Hand betätigbares 3/2-Wegeschaltventil 24 vorgesehen, das in seiner gezeigten, durchlässigen Stellung den Fluidkreis von Motor 18 zur Wärmetauschereinrichtung 10 herstellt. In der anderen Schaltstellung sperrt das Ventil 24 den hydraulischen Kreis in Richtung der Wärmetauschereinrichtung 10 ab, was die Möglichkeit eröffnet, Wartungsarbeiten vorzunehmen, beispielsweise verbrauchte Filterelemente der Filtereinrichtung 12 zu tauschen, ohne von nachströmendem Fluid im Kreis 20 beeinträchtigt zu sein.

Wie sich weiter aus der Fig. 2 ergibt, ist die Eingangsseite des Hydromotors 18 über eine erste Anschlussstelle 26 an den hydraulischen Kreis 20 mit dem genannten Verbraucher 14 angeschlossen, wobei insoweit ein Konstantanteil an Fluidmenge für einen störungsfreien Betrieb des Motors 18 diesem direkt zugeführt wird. Über eine weitere zweite Anschlussstelle 28 wird insoweit im Nebenzweig in Fluidrichtung hinter dem Schaltventil 24 die Restfluidmenge, gegebenenfalls mit variabler Volumenmenge an die Wärmetauschereinrichtung 10 weitergegeben. Letztere ist über ein übliches Rückschlagventil 30 gegen Überlast abgesichert. In weiterer Parallelschaltung zum Rückschlagventil 30 und zur Wärmetauschereinrichtung 10 ist in den hydraulisch Kreis 20 ein temperaturgesteuertes 2/2-Wegeproportionalventil 32 geschaltet, das mit wachsender Fluidtemperatur in die gesperrte Stellung übergeht um dergestalt das erwärmte Fluid der Wärmetauschereinrichtung 10 ausschließlich zuzuführen. Da insbesondere in der Kaltstartphase das zu transportierende Fluid zähflüssig ist und insoweit in kaltem Zustand auch nicht gekühlt zu werden braucht, kann man durch entsprechende Öffnung des Proportionalventiles 32 in Richtung der Durchlassstellung die Wärmetauschereinrichtung 10 entlasten.

In jedem Fall gelangt eine vorgebbare Rücklaufmenge an die Filtereinrichtung 12 mit ihrem ersten Filterelement 34. Das insoweit filtrierte und mithin gereinigte Fluid gelangt dann über die Abgabeleitung 36 an ein zweites Filterelement 38, das vor dem Verbraucher 14 mit der Speisepumpe angeordnet ist. Im weiteren Nebenzweig 40 mündet dann die Abgabeleitung 36 in eine als Ganzes mit 42 bezeichnete Nachsaugeinrichtung. Die Nachsaugeinrichtung weist im Nebenzweig 40 zur Tankseite 44 hin orientiert ein Vorspannventil 46 auf, das zur Tankseite 44 in seine Öffnungsstellung übergeht und in der gegenläufigen Richtung seine in der Fig. 2 gezeigte Schließstellung einnimmt. Das dahingehende Vorspannventil besteht vorzugsweise aus einem federbelasteten Rückschlagventil. Parallel zum Vorspannventil 46 angeordnet, mit entsprechender Fluidanbindung vor und hinter dem Vorspannventil in den Nebenzweig 40, ist in den fluidischen Kreis 20 ein Nachsaugventil 48 geschaltet, das in der Art eines Rückschlagventiles ausgebildet zur Tankseite 44 hin schließt und in gegenläufiger Richtung zum hydraulischen Verbraucher 14 hin die Öffnungsstellung einnimmt. Während das Vorspannventil 46 einen Vorspanndruck von beispielsweise 0,5 bar in charakteristischer Weise aufweist, öffnet das Nachsaugventil 48 unmittelbar, sofern die Speisepumpe des Verbrauchers 14 von der Tankseite 44 her Vorratsfluid nachfordert, was insbesondere der Fall ist, wenn über das Filterelement 34 nicht genug Fluid nachströmt.

Des weiteren weist das erste Filterelement 34 in Parallelschaltung ein Bypassventil 50 auf, das als federbelastetes Rückschlagventil ausgebildet zur Tankseite 44 hin öffnet und im übrigen auf einen Bypassöffnungsdruck von beispielsweise 2 bar eingestellt ist. Ist das Filterelement 34 der Filtereinrichtung 12 verschmutzt und insoweit verblockt, kann die Fluidmenge bei geöffnetem Bypassventil 50 zu dem hydraulischen Verbraucher 14 gelangen, wobei im dahingehenden Bypassfall die Filtration der Rücklaufmenge an den Verbraucher 14 über das zweite Filterelement 38 erfolgt.

Der Vorspanndruck von beispielsweise 0,5 bar am Vorspannventil 46 stellt sicher, dass insoweit vorgespanntes Fluid von der Filtereinrichtung 12 kommend, dem hydraulischen Verbraucher 14 zur Verfügung steht. Steigt der Vorspanndruck der Fluidrücklaufmenge an, die vom ersten Filterelement 34 in die Abgabeleitung 36 sowie den Nebenzweig 40 gelangt, öffnet das Vorspannventil 46 zur Tankseite hin und entspannt insoweit die Rücklaufmenge bis wieder der für den Verbraucher 14 vorgesehene Nominaldruck im vorliegenden Fall von 0,5 bar erreicht ist. Fließt über die erste und zweite Anschlussstelle 26, 28 zu wenig Fluid in den hydraulischen Kreis 20 nach, erlaubt die Saugseite der Speisepumpe für den Verbraucher 14 ein Nachsaugen aus einer Tankvorratsmenge in dem das Nachsaugventil 48 der Nachsaugeinrichtung 42 in Richtung des Verbrauchers 14 öffnet und insoweit das Nachfließen des Fluidmediums sicherstellt. Insoweit kommt es beim Betrieb des Verbrauchers 14 zu keiner Zeit zu einer Unterversorgung an Verbraucherfluid, was für den Betrieb hydrostatischer Fahrantriebe bereits aus Sicherheitsgründen eine Notwendigkeit darstellt.

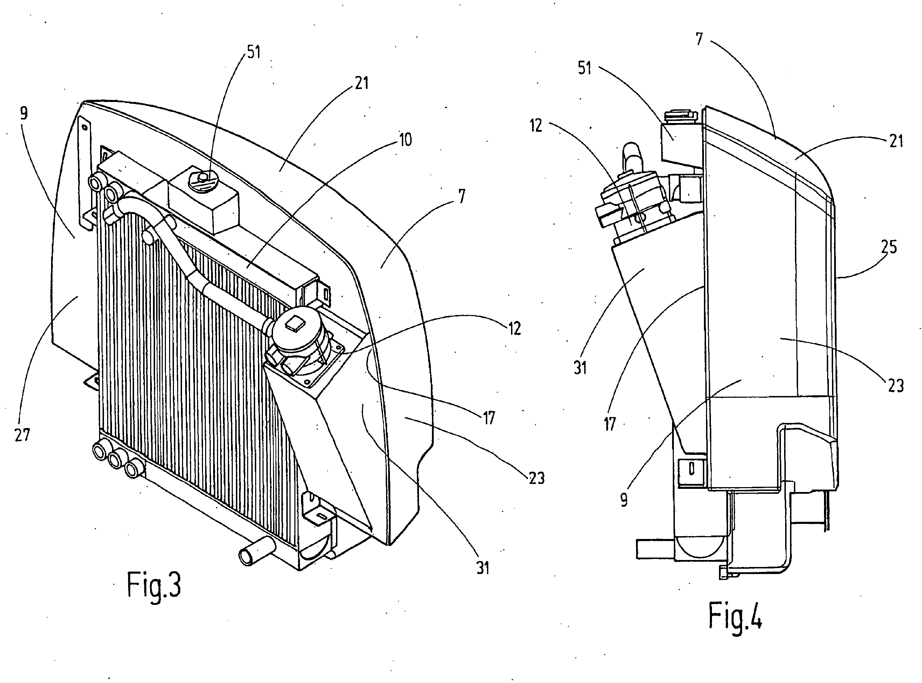

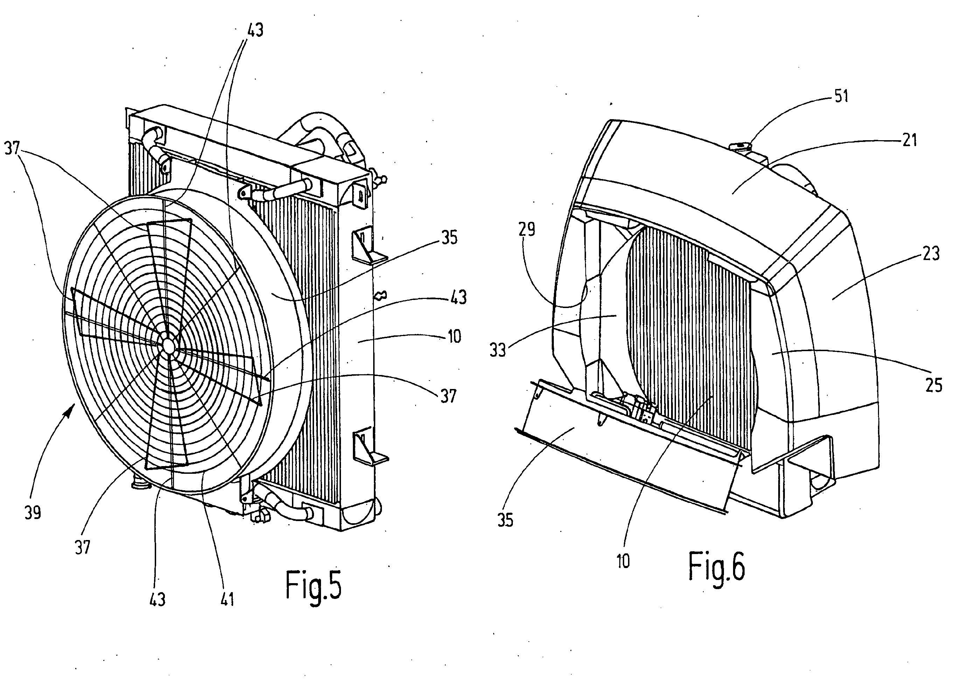

Die Fig. 3 bis 6 zeigen nähere Einzelheiten des Aufbaus des Ausführungsbeispieles der Fluidkühlvorrichtung 5, die in die Arbeitsmaschine 1 derart integriert ist, dass die Fluidkühlvorrichtung 5 den vorderen oder hinteren Karosserieabschluss bildet. Wie Fig. 1 zeigt, geht der Tank 9 mit seiner Wandaußenkontur 7 stufenfrei kontinuierlich an einer Anschlussstelle 15 (Fig. 1) in die Haube 11 über, die ein weiteres Teil der Außenverkleidung bildet. Wie Fig. 3 und 4 zeigen, ist entlang der Anschlussstelle 15 eine linienförmige Dichtung 17 geführt, die eine Abdichtung zwischen Tank 9 und der anschließenden Haube 11 bildet. Der Tank 9 ist mittels eines Rotationsformverfahrens aus einem schlagfesten und witterungsbeständigen Kunststoffmaterial, beispielsweise einem Polyamid, wie PA6, oder durch ein Blechformteil gebildet und so gestaltet, dass er mit seiner Außenkontur 7 den Karosserieabschluss mit leicht gewölbter Oberseite 21 und ebenfalls gewölbten Seiten 23 bildet, wobei Oberseite 21 und Seiten 23 leicht verjüngt zu einer Stirnwand 25 verlaufen. Rückseitig und an die Dichtung 17 angrenzend bildet der Tank 9 eine Rückwand 27, die ebenflächig ist, abgesehen von einem randseitig an der Rückwand 27 angeformten Aufnahmekanal 31 für die Filtereinrichtung 12. Zwischen einer großflächigen Öffnung 29 (Fig. 6) in der Stirnwand 25 und der Rückwand 27 bildet das Tankgehäuse eine durchgehende Mittenausnehmung 33 (Fig. 6), die einen Luftströmungskanal zwischen der Öffnung 29 in der Stirnwand 25 und einer entsprechenden Öffnung der Rückwand 27 bildet. Wie Fig. 3 zeigt, ist an dieser, in der Darstellung nicht sichtbaren Öffnung, die Wärmetauschereinrichtung 10 in Form eines Lammellenkühlers angebracht.

Im Bereich der Stirnwand 25 ist in der Mittenausnehmung 33 des Tankgehäuses eine Lüftereinrichtung 35 aufgenommen, deren Lüfterschaufeln 37 vom Hydromotor 18 (Fig. 2) angetrieben sind. Die Lüftereinrichtung 35 ist in der Öffnung 29 der Mittenausnehmung 33 so angeordnet, dass ihre vordere Lüfterabdeckung 39 aus kreisförmigen Gitterringen 41 und radial verlaufenden Gitterstegen 43 in der Art eines Kühlergrills ein Bestandteil der Außenverkleidung der Fahrzeugfront oder des Fahrzeughecks bilden, siehe Fig. 1.

Der vorzugsweise in einem Rotationsformverfahren aus Kunststoff, wie Polyamid PA6 oder als Blechformteil hergestellte Tank 9 weist an der Rückwand 27 einen oben mittig liegenden Füllanschluss 51 auf. Der Innenraum des Tanks 9 ist in unmittelbarer Fluidverbindung dem Aufnahmekanal 31, der die Filtereinrichtung 12 enthält, so dass eine unmittelbare Fluidverbindung zur Nachsaugleitung 52 (Fig. 2) gebildet ist, in die das Nachsaugvenitl 48 geschaltet ist, so dass diesbezüglich keine äußere Rohrleitung erforderlich ist. Wie bereits erwähnt, ist bei der Erfindung, bei der die Wandaußenkontur 7 des Tanks Bestandteil der Verkleidung ist, keine Trennwand innerhalb der Maschinenverkleidung erforderlich, weil der Tank 9 selbst die Funktion der Trennwand erfüllt, die ein Ansaugen eigener, erwärmter Luft verhindert. Es besteht daher keine Gefahr, dass ein Versagen von Abdichtungen zwischen einer etwaiger Trennwand und Verkleidungsteilen zu einem Nachsaugen erwärmter Luft führen könnte. Bei der erfindungsgemäßen Vorrichtung würde im übrigen eine derartige Gefährdung auch dann nicht bestehen, falls die Dichtung 17 an der Anschlussstelle 15 mit der Haube versagen sollte, weil in diesem Falle ein gegebenenfalls an der Anschlussstelle 15 gebildeter Eintrittsspalt lediglich einen Lufteintritt von der Umgebung und damit keine Beeinträchtigung der Kühlerleistung zur Folge hätte. Die Dichtung 17 ist daher lediglich zum Schutz gegen Spritzwasser, Regen oder Schmutz erforderlich. Ein weiterer Vorteil der Erfindung besteht darin, dass sie einen Beitrag zur Geräuschminderung leistet, da die Lüftereinrichtung 35 vom Tank 9 mit dem darin befindlichen Fluid umgeben ist, was insgesamt zur Geräuschdämmung führt.

Anstelle einer mittigen Befüllmöglichkeit für den Fluidtank 9 kann auch eine randseitige Befüllung möglich sein oder eine sonstige Position. Die Tankaußenform kann der Kontur der Maschinenabdeckung angepasst werden und auch eine Form aufweisen gemäß der Darstellung nach der Fig. 1. In Blickrichtung auf die Fig. 2 gesehen, kann oberhalb des Filters 12 über eine nicht näher dargestellte Anschlussleitung ungekühltes Öl aus der Arbeitshydraulik gefiltert werden. Die Lüftereinrichtung 35 kann zum einen auf dem Kühler 10 und zum anderen direkt auf dem Tank 9 befestigt werden, vorzugsweise an der dem Kühler zugewandten Seite 27.

## Patentansprüche

1. Fluidkühlvorrichtung (5) mit mindestens einer Wärmetauschereinrichtung (10) zur Kühlung mindestens eines Arbeits- oder Kühlfluids, das im Betrieb von fahrbaren Arbeitsmaschinen (1) sich erwärmt oder eingesetzt ist, die zur Abdeckung von Maschinen-, Motor- oder Chassisteilen über eine Maschinenverkleidung (11) verfügen, und mit einem das Arbeits- und/oder Kühlfluid beinhaltenden Tank (9) mit vorgebbarer Wandaußenkontur (7), **dadurch gekennzeichnet, dass** zumindest Teile der Wandaußenkontur (7) Bestandteil der Maschinenverkleidung (11) sind.

2. Fluidkühlvorrichtung nach Anspruch 1, **dadurch gekennzeichnet, dass** Teile (21, 23) der Wandaußenkontur (7) des Tanks (9), die der Umgebung zugewandt sind, als Bestandteil der Maschinenaußenverkleidung (11) in diese entlang einer Anschlussstelle (15) übergehen.

3. Fluidkühlvorrichtung nach einem der vorhergehenden Ansprüche, **dadurch gekennzeichnet, dass** die Anschlussstelle (15) stufenfrei den kontinuierlichen Übergang zwischen Maschinenaußenverkleidung (11) und Wandaußenkontur (7) des Tanks (9) herstellt.

4. Fluidkühlvorrichtung nach einem der vorhergehenden Ansprüche, **dadurch gekennzeichnet, dass** entlang der Anschlussstelle (15) eine linienförmig geführte Dichtung (17) zwischen Maschinenaußenverkleidung (11) und Wandaußenkontur (7) des Tanks (9) angeordnet ist.

5. Fluidkühlvorrichtung nach einem der vorhergehenden Ansprüche, **dadurch gekennzeichnet, dass** der Tank (9) im randseitigen Bereich des Tankgehäuses einen integrierten Aufnahmekanal (31) für die Aufnahme einer Filtereinheit (12) aufweist.

6. Fluidkühlvorrichtung nach einem der vorhergehenden Ansprüche, **dadurch gekennzeichnet, dass** der Tank (9) im Bereich seiner der Umgebung zugewandten Stirnseite (25) eine Lüftereinrichtung (35) aufweist, die mit ihrer Lüfterabdeckung (39) gleichfalls als Bestandteil der Maschinenaußenverkleidung in diese integriert ist.

7. Fluidkühlvorrichtung nach einem der vorhergehenden Ansprüche, **dadurch gekennzeichnet, dass** der Tank (9) innerhalb des Tankgehäuses mit einer durchgehenden Mittenausnehmung (33) versehen ist, innerhalb der die Lüfterschaufeln (37) geführt sind.

8. Fluidkühlvorrichtung nach einem der vorhergehenden Ansprüche, **dadurch gekennzeichnet, dass** die Wärmetauschereinrichtung (10) eine Art Lamellenkühler ist, der auf der der Lüftereinrichtung (35) gegenüberliegenden Seite (27) an das Tankgehäuse anschließt oder gleichfalls integraler Bestandteil des Tankgehäuses ist.

9. Fluidkühlvorrichtung nach einem der vorhergehenden Ansprüche, **dadurch gekennzeichnet, dass** die Filtereinrichtung (12) über Ventileinheiten verfügt, die beispielsweise ein Vorspann- (46), Nachsaug- (48) oder Bypassventil (50) beinhalten.

10. Fluidkühlvorrichtung nach einem der vorhergehenden Ansprüche, **dadurch gekennzeichnet, dass** das Tankgehäuse (9) aus einem schlagfesten, witterungsbeständigen Kunststoffmaterial oder aus einem Blechformteil besteht.

## Claims

1. A fluid cooling apparatus (5) comprising at least one heat exchanger device (10) for cooling at least one working or cooling fluid which is heated or used during the operation of mobile working machines (1), which have an engine covering (11) to cover engine, motor or chassis parts, and comprising a tank (9) that contains the working and/or cooling fluid and has a pre-determinable outer wall contour (7), **characterised in that** at least parts of the outer wall contour (7) are a component of the engine covering (11).

2. The fluid cooling apparatus according to Claim 1, **characterised in that** parts (21, 23) of the outer wall contour (7) of the tank (9) that face the surrounding area merge with the outer engine covering along a connecting point (15) as a component of the outer engine covering (11).

3. The fluid cooling apparatus according to any of the preceding claims, **characterised in that** the connecting point (15) produces seamlessly the continuous transition between the outer engine covering (11) and the outer wall contour (7) of the tank (9).

4. The fluid cooling apparatus according to any of the preceding claims, **characterised in that** a line-shaped gasket (17) is arranged between the outer engine covering (11) and the outer wall contour (7) of the tank (9) along the connecting point (15).

5. The fluid cooling apparatus according to any of the preceding claims, **characterised in that** the tank (9) has an integrated receiving channel (31) for receiving a filter unit (12) in the peripheral region of the tank housing.

6. The fluid cooling apparatus according to any of the preceding claims, **characterised in that** the tank (9) has a fan device (35) in the region of the tank's face side (25) facing the surrounding area, and this fan device is also integrated with its fan cover (39) into the outer engine covering as a component of the outer engine covering.

7. The fluid cooling apparatus according to any of the preceding claims, **characterised in that** the tank (9) is provided with a continuous central recess (33) inside the tank housing and the fan blades (37) are driven inside this central recess.

8. The fluid cooling apparatus according to any of the preceding claims, **characterised in that** the heat exchanger device (10) is a type of air fin cooler which is connected to the tank housing on the side (27) opposite the fan device (35) or is also an integral component of the tank housing.

9. The fluid cooling apparatus according to any of the preceding claims, **characterised in that** the filter device (12) has valve units which include, for example, a pre-charge valve (46), a replenishing valve (48) or a bypass valve (50).

10. The fluid cooling apparatus according to any of the preceding claims, **characterised in that** the tank housing (9) is made of an impact-resistant and weather-proof plastic material or consists of a moulded sheet metal part.

## Revendications

1. Dispositif (5) de refroidissement de fluide ayant au moins un dispositif (10) d'échangeur de chaleur pour le refroidissement d'au moins un fluide de travail ou d'un fluide de refroidissement, qui s'échauffe ou qui est utilisé lorsque fonctionnent des machines (1) mobiles fournissant du travail, qui disposent d'un capotage (11) de machine pour recouvrir des parties de machine, de moteur ou de châssis, et comprenant un réservoir (9) contenant le fluide de travail et/ou le fluide de refroidissement et ayant un contour (7) extérieur de paroi pouvant être donné à l'avance, **caractérisé en ce qu'**au moins des parties du contour (7) extérieur de paroi font partie du capotage (11) de la machine.

2. Dispositif de refroidissement de fluide suivant la revendication 1, **caractérisé en ce que** des parties (21, 23) du contour (7) extérieur de paroi du réservoir (9), qui sont tournées vers l'atmosphère extérieur, se transforment en tant que partie du capotage (11) extérieur de la machine en celui-ci le long d'un emplacement (15) de raccordement.

3. Dispositif de refroidissement de fluide suivant l'une des revendications précédentes, **caractérisé en ce que** l'emplacement (15) de raccordement ménage, sans palier, la transition continue entre le capotage (11) extérieur de la machine et le contour (7) extérieur de paroi du réservoir (9).

4. Dispositif de refroidissement de fluide suivant l'une des revendications précédentes, **caractérisé en ce qu'**il y a, le long de l'emplacement (15) de raccordement, une garniture (17) d'étanchéité passant sous la forme d'une ligne entre le capotage (11) extérieur de la machin et le contour (7) extérieur de paroi du réservoir (9).

5. Dispositif de refroidissement de fluide suivant l'une des revendications précédentes, **caractérisé en ce que** le réservoir (9) a, dans la partie du côté du bord de l'enveloppe du réservoir, un canal (31) intégré de réception d'une unité (12) de filtration.

6. Dispositif de refroidissement de fluide suivant l'une des revendications précédentes, **caractérisé en ce que** le réservoir (9) a, dans la partie de son côté (25) frontal tourné vers l'atmosphère extérieur, un dispositif (35) de ventilateur, qui, par son recouvrement (39) de ventilateur, est intégré de la même façon comme composant du capotage extérieur de la machine dans celui-ci.

7. Dispositif de refroidissement de fluide suivant l'une des revendications précédentes, **caractérisé en ce que** le réservoir (9) est pourvu, à l'intérieur de l'enveloppe du réservoir, d'un évidement (33) médian traversant, à l'intérieur duquel passent les pales (37) du ventilateur.

8. Dispositif de refroidissement de fluide suivant l'une des revendications précédentes, **caractérisé en ce que** le dispositif (10) d'échangeur de chaleur est un refroidisseur de type à lamelles, qui, du côté (27) opposé au dispositif (35) de ventilateur, se raccorde à l'enveloppe du réservoir ou fait partie également intégrante de l'enveloppe du réservoir.

9. Dispositif de refroidissement de fluide suivant l'une des revendications précédentes, **caractérisé en ce que** le dispositif (12) de filtration dispose d'unités de vanne, qui comportent, par exemple, une vanne (46) élévatrice de pression, une vanne (48) de post-aspiration ou une vanne (50) de dérivation.

10. Dispositif de refroidissement de fluide suivant l'une des revendications précédentes, **caractérisé en ce que** l'enveloppe (9) du réservoir est en une matière plastique résistante aux chocs et résistante aux intempéries ou en une pièce conformée en tôle.
